# EUROPEAN PATENT SPECIFICATION

(11) **EP 1 615 370 B1**
(45) Date of publication and mention of the grant of the patent: **31.08.2011**
(21) Application number: 04405416.1
(22) Date of filing: 05.07.2004
(51) Int. Cl.: H04L 9/32, H04L 29/06

(54) **Authentication of short messages**
Authentifizierung von Kurznachrichten.
Authentification des messages courts

(43) Date of publication of application: 11.01.2006
(73) Proprietor: ABB Research Ltd., 8050 Zürich (CH)
(72) Inventor: Dzung, Dacfey, 5430 Wettingen (CH)
(74) Representative: ABB Patent Attorneys

(56) References cited:
- EP-A- 1 351 480
- US-A- 5 671 283
- US-A1- 2003 236 992

## Description

### FIELD OF THE INVENTION

The invention relates to the field of communication systems, and in particular to the authentication of messages in communication systems.

### BACKGROUND OF THE INVENTION

Communication systems exchange information in the form of messages. The messages are used to transmit commands and data files between the systems. In order to provide security against message tampering and fake message generation, the messages are sent with a message authentication code (MAC). A MAC is also known as a message integrity code, integrity check value, cryptographic checksum or keyed hash. The MAC for a message may be calculated by first calculating a hash value for the message. A hash value is a value that is generated for a message that depends on all the bits of the message. The hash value is also called a message digest and is equivalent to checksums that are used to detect message transmission errors. The hash value is generated with the help of one-way algorithms, such as MD5 and SHA, which produce 128 or 160 bit hashes. The hash value is then encrypted by using a key. The key is known to the communication systems exchanging the messages. The MAC is then sent with the message. It acts like a digital signature for the message.

The communication system at the receiving end receives the message along with the MAC. This communication system calculates a MAC for the received message. The calculated MAC is used to check if the received message has been tampered with. If the calculated MAC differs from the received MAC, then the communication system rejects the message. This is because the calculated MAC of a tampered message is different from the received MAC.

An attacker trying to tamper with messages can also calculate a MAC for the tampered message. However, in order to calculate a valid MAC for a message, the attacker should be aware of the key used to calculate the MAC. The attacker can also try to guess the MAC.

However, the probability of guessing a MAC correctly is inversely proportional to two raised to the power of the bit length of the MAC. Hence, bit lengths of MACs are kept sufficiently large, in order to prevent attackers from correctly guessing the MACs.

In industrial applications, the message size is usually small and the data transmission bandwidth is limited. For example, messages may comprise simple sensor status reports and actuator commands. Hence, adding a large MAC to each message results in a large overhead on the data bandwidth. However, if the size of the MAC is reduced, the vulnerability of the messages to tampering becomes high. In light of this, messages transmitted in industrial applications should be provided with MACs with limited bit lengths that do not significantly increase the overhead on the data bandwidth and at the same time provide an adequate level of protection against messages being tampered with.

US 5,671,283 is concerned with a cryptographic communication system for protecting messages comprising a plurality of packets, each packet consisting of a plurality of blocks, against re-ordering of packets. To this purpose, encryption of data blocks and computation of MACs are cross-linked by selecting one (preferably the last) of the plurality of encrypted data blocks of packet p-1 as the initial vector for calculating the MAC of packet p.

US 2002/0174332 relates to radio transmission with limited block size, and mentions variable-length MACs of 8 - 32 bits that require an additional two-bit identifier to define the actual length of the MAC for each packet. US 2002/0174332 propose to compute a MAC in a conventional way and add it to the message to form Protocol Data Unit (PDU). In case the length of the PDU is longer than the length of a data block, but the extra bits are less than the size of the MAC, the PDU is truncated and transmitted as one single data block. A minimum remaining MAC length of 8 bits is however required even for some non-critical messages.

### DESCRIPTION OF THE INVENTION

It is therefore an objective of the invention to authenticate messages in communication systems with the help of short MACs. These objectives are achieved by a method of authenticating messages according to claim 1, and an apparatus for the authentication of messages according to claim 5.

Further preferred embodiments are evident from the dependent patent claims.

According to the invention, a MAC for a message is calculated at a sending module. The MAC is dependent on at least one of the previously transmitted messages. The message is then transmitted to a receiving module along with the MAC. The receiving module stores the message and the MAC and independently calculates a MAC for the received message. The MAC for the received message is dependent on the received at least one previously transmitted message. If the calculated MAC for the received message matches the received MAC, then the received message is declared provisionally authentic. The message declared provisionally authentic is considered fully authentic when at least one subsequent message, with a MAC depending on and being transmitted after the message declared provisionally authentic, has itself been declared provisionally authentic.

In a preferred embodiment of the invention, the MAC for a message is calculated based on all previously transmitted or received messages, i.e. the MAC depends on all the messages transmitted since the last initialisation. A received message is considered fully authentic as soon as a specified number of subsequent messages have themselves been declared provisionally authentic.

The MAC is calculated by using a block cipher with feedback algorithm. The size of the MAC is limited. Since the MAC of a message depends on at least one of the previously transmitted messages, declaring a message as provisionally authentic gives an indication about the authenticity of the at least one previously received messages. In this way, messages that are declared provisionally authentic, received after a message, are used to declare the message as fully authentic.

In a first preferred variant of the invention, a trust level is defined for each message. The trust level specifies the number of messages received after the previous message to be declared provisionally authentic, in order to declare the message as fully authenticated.

In a second preferred variant, the trust level is defined based on the importance or sensitivity of the message. This is determined by the sending module or can be defined with the help of a user input. The trust level of each message is communicated to the receiving module by the sending module along with each message.

### BRIEF DESCRIPTION OF THE DRAWINGS

The subject matter of the invention will be explained in more detail in the following text with reference to preferred exemplary embodiments illustrated in the attached drawings, of which:
- Fig. 1: depicts a block diagram of an environment, in accordance with an exemplary embodiment of the present invention,
- Fig. 2: depicts a block diagram of a sending module and a receiving module, in accordance with an exemplary embodiment of the present invention,
- Fig. 3: depicts a flow chart for a method of authenticating messages, in accordance with an embodiment of the present invention,
- Fig. 4: is a block diagram illustrating the generation of a message authentication code by the sending module, and
- Fig. 5: is a block diagram illustrating the verification of a message authentication code by the receiving module.

The reference symbols used in the drawings, and their meanings, are listed in summary form in the list of reference symbols. In principle, identical parts are provided with the same reference symbols as in the figures.

### DETAILED DESCRIPTION OF PREFERRED EMBODIMENTS

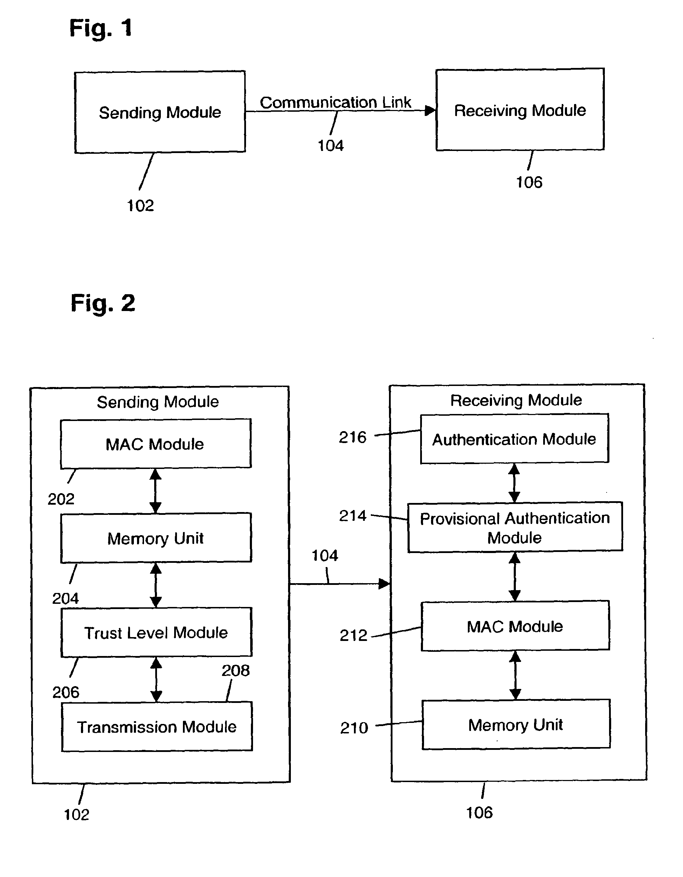

Fig. 1 depicts a block diagram of an exemplary environment, in accordance with an exemplary embodiment of the present invention. A sending module 102 receives a message, which is to be transmitted from a system that generates the messages. The system can be in the form of a central server or a control system that generates commands to be sent to individual machines. It can also be in the form of sensors or individual machines that send status reports to a central server or a control system. Sending module 102 calculates a message authentication code (MAC) for the message to be transmitted. The message, along with the MAC, is then transmitted via a communication link 104 to a receiving module 106. Communication link 104 can be in the form of a local area network (LAN), an Ethernet, the Internet, a telephone line adapted to carry out data communication, a wireless communication medium and the like. Receiving module 106 calculates a MAC, using the received message. Receiving module 106 authenticates the received message by comparing the received MAC with the calculated MAC. The authenticated message is then forwarded to the recipient of the message, which is connected to receiving module 106. The recipient may be an actuator or a machine that executes the received messages. It can also be a central server or a control system that receives status updates from actuators, machines or sensors in the form of messages.

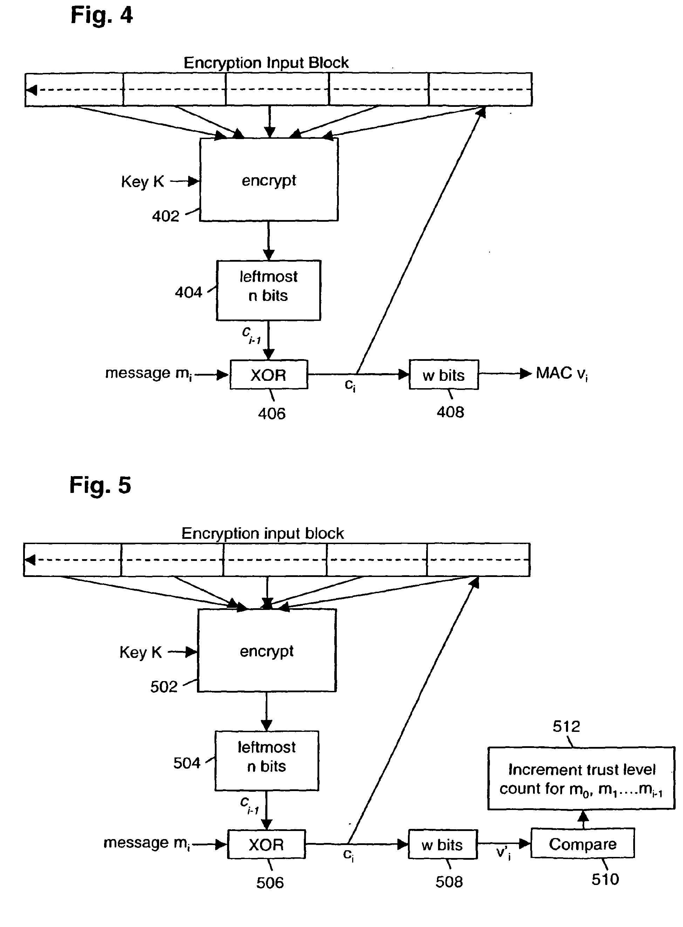

Fig. 2 depicts a block diagram of sending module 102 and receiving module 106, in accordance with an exemplary embodiment of the present invention. Sending module 102 comprises a MAC module 202, a memory unit 204, a trust level module 206 and a transmission module 208. MAC module 202 is used for the generation of a MAC for a message. Memory unit 204 is used to store the previously transmitted messages along with the transmitted MACs of the messages. MAC module 202 calculates a MAC for a message on the basis of the message and the previous messages. Trust level module 206 assigns a level of authentication required for the message to be transmitted. The level of authentication is based on the importance of the message. The level of authentication, or the trust level, of a message specifies the number of messages received subsequent to the message, which should be declared provisionally authentic in order to declare the message as fully authentic. A message is declared provisionally authentic when the received MAC matches the calculated MAC. The trust level can also specify the effective MAC length of the message required in order to declare the message as fully authentic. The trust level of a message is explained in more detail in conjunction with Fig. 4. Transmission module 208 transmits the messages along with the calculated MACs and the trust level to receiving module 106.

Receiving module 106 comprises a memory unit 210, a MAC module 212, a provisional authentication module 214, and an authentication module 216. Memory unit 210 stores the received message. It also stores the previously received messages and the trust level for each stored message. The trust level of a message specifies the number of messages, received subsequent to the message, which have been declared provisionally authentic. MAC module 212 calculates a MAC for the received message on the basis of the message and the previous received message, which is stored in memory unit 210. Provisional authentication module 214 declares the received message as provisionally authentic if the received MAC matches the calculated MAC. Authentication module 216 is used to declare a message stored in memory unit 210 as fully authentic when the trust level count of the stored message exceeds the required trust level of the message.

In one embodiment of the present invention, sending module 102 and receiving module 106 are in the form of processors that are programmed to carry out the tasks of the various modules of sending module 102 and receiving module 106, respectively. It will be apparent to one skilled in the art that sending module 102 and receiving module 106 can be combined to form one single integrated module that performs the tasks of both sending module 102 and receiving module 106 for the purpose of bi-directional communication, without deviating from the scope of the invention.

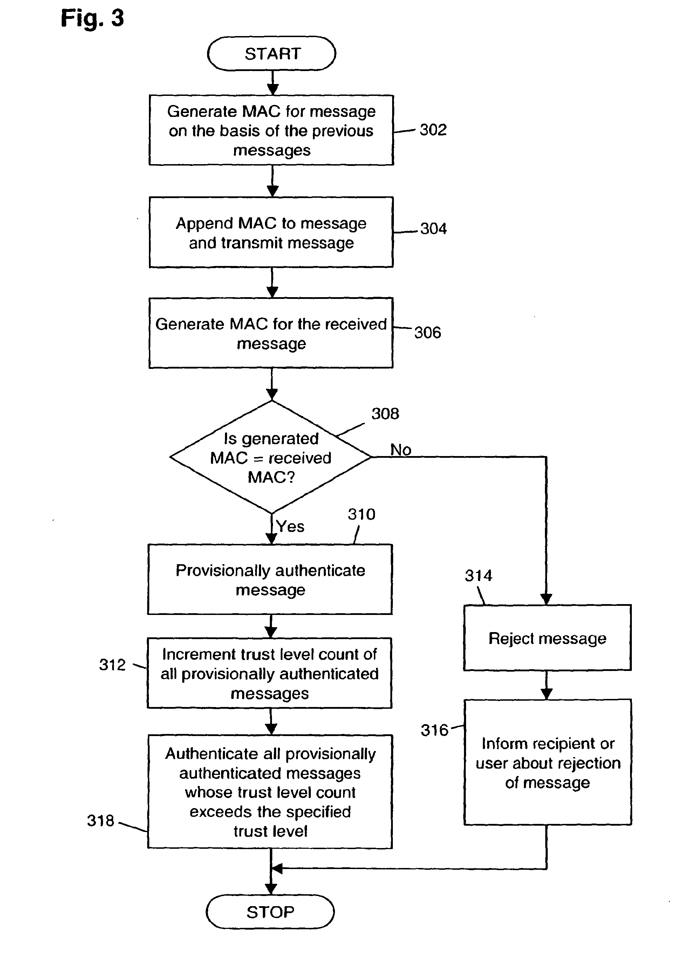

Fig. 3 depicts a flow chart of a method for authenticating messages, in accordance with an embodiment of the present invention. At step 302, a MAC vᵢ is calculated for the message mᵢ to be transmitted. MAC vᵢ is calculated by using a block cipher with feedback algorithm. Block cipher with feedback algorithms uses the Cipher Block Chaining (CBC) mode, Output Feedback (OFB) mode, or Cipher Feedback (CFB) mode to calculate a MAC. The use of feedback ensures that MAC vᵢ depends on previously transmitted message mᵢ₋₁. Since MAC vᵢ₋₁ of previously transmitted message mᵢ₋₁ depends on message mᵢ₋₂ transmitted prior to the previously transmitted message, the MAC of any message in fact depends on all the previously transmitted messages. At step 304, MAC vᵢ is appended to message mᵢ and the message is transmitted to receiving module 106 via communication link 104. At step 306, receiving module 106 calculates a MAC v'ᵢ for the received message mᵢ. The MAC is calculated by using a method that is similar to the method used by sending module 102 to calculate a MAC. Since sending module 102 uses feedback to calculate a MAC, receiving module 106 also uses previously received message mᵢ₋₁ to calculate MAC v'ᵢ for received message mᵢ. At step 308, MAC v'ᵢ, calculated by receiving module 106, is compared with received MAC vᵢ to declare received message mᵢ as provisionally authentic. If both the MACs match, the received message is provisionally considered as not been tampered with and authentic, and the message is declared provisionally authentic at step 310. Since the MAC is calculated based on the received message, any alteration in the received message will result in a MAC that is different from the received MAC. At step 312, the trust level counts of all previously received messages, which are declared provisionally authentic, are incremented.

If the calculated MAC v'ᵢ does not match the received MAC vᵢ, then message mᵢ is rejected, at step 314. At step 316, the desired recipient of the message or a user is informed about the rejection of a received message. The recipient or the user then decides about the rejection or final authentication for all previously received provisionally declared authentic messages.

At step 318, the trust level count of all provisionally declared authentic messages is compared with the trust level specified for all the messages. Each provisionally declared authentic message whose trust level count exceeds the specified trust level is then declared fully authentic. Fully authentic messages are then forwarded to the recipient connected to receiving module 106. In order to reduce delay, the received message may be alternatively forwarded to the desired recipient when it is declared provisionally authentic. The recipient is informed about the provisional trust level of the message. It is the responsibility of the recipient to take this information into account and execute the message or wait until the message has been declared fully authentic.

Fig. 4 is a block diagram illustrating the generation of a MAC by sending module 102. A MAC for a message is calculated by using a block cipher with feedback algorithm. Feedback modes such as the Cipher Block Chaining (CBC) mode, Output Feedback (OFB) mode, or Cipher Feedback (CFB) mode, as described in Chapter 9 of the book "Applied Cryptography" by Bruce Schneier, John Wiley, New York 1996, can be used in accordance with an embodiment of the present invention. Fig. 4 shows the generation of a MAC, using the block cipher with output feedback (OFB) mode algorithm. In this algorithm, a key-dependent encrypted output value is XORed with the message to be transmitted, in order to calculate the MAC for the message. The key-dependent encrypted output value is generated via encrypting, with the help of a key, an encryption input block comprising the MACs of the preceding messages. A part of the encryption input block is used, together with the MAC of the message, to form an updated encryption input block for calculating the MAC of the subsequent message. The key should also be known to the receiving module in order to successfully authenticate the received messages. The encryption input block for the first message to be transmitted is known as an initialization vector and is a random number. The first MAC value is generated on the basis of this initialization vector and the first message to be transmitted.

In more detail, for a message mᵢ, MAC vᵢ is calculated by encrypting the encryption input block value with a key K, at 402. The result is limited in size to n bits to obtain an encrypted output value cᵢ₋₁ at 404. Cᵢ₋₁ is XORed with message mᵢ to obtain cᵢ, at 406. Cᵢ forms part of the updated encryption input block value for the next message mᵢ₊₁. Cᵢ is limited in size to w bits to form MAC vᵢ at 408. In one embodiment of the present invention, the length of the encryption input block is given by the block encryption algorithm and is typically 64 or 128 bits. The size, n, of the messages is 32 bits and the size, w, of the MAC transmitted with each message is limited to 8 bits.

Since MAC vᵢ is calculated on the basis of the encryption input block value of the previous message, it depends on previous message mᵢ₋₁. Similarly, the MAC vᵢ₋₁ of previous message mᵢ₋₁ depends on message mᵢ₋₂. Hence, a message in a sequence of messages depends on all the previously transmitted messages. In order for mᵢ to be declared fully authentic, receiving module 106 needs to store previous received message mᵢ₋₁.

Fig. 5 is a block diagram illustrating the authentication of a MAC by receiving module 106. The MAC v'ᵢ for the received message mᵢ is calculated at receiving module 106. The MAC is calculated at steps 502, 504, 506 and 508 by using the same procedure illustrated in Fig. 4. Receiving module 106 uses the same key K as sending module 102. The key K is provided to receiving module 106, using any secure key exchange method before the start of message communication. In an embodiment of the present invention, this is carried out by manual configuration of sending module 102 and receiving module 106. The initialization vector is also transmitted to the receiving module to ensure that the encryption input block generated at receiving module 106 is the same as the encryption input block being generated at sending module 102. Receiving module 106 stores previously received messages in order to calculate MACs for subsequent messages by using the same feedback scheme as used in sending module 106. At 510, calculated MAC v'ᵢ is compared with received MAC vᵢ. If both the MACs are the same, then message mᵢ is declared provisionally authentic. At 512, the trust levels of all previously received provisionally declared authentic messages, m₀, m₁.... mᵢ₋₁, is incremented.

Additionally, provisional authentication of a message is used to build up the trust level of the previously received messages, because authentication of subsequent messages depends on the correct authentication of the previous messages. In order for message mᵢ₊₁ to be declared provisionally authentic by receiving module 106, message mᵢ should be authentic. This is because calculated MAC v'ᵢ₊₁ for message mᵢ₊₁ depends on message mᵢ. If mᵢ is not authentic, v'ᵢ₊₁ will not match vᵢ₊₁. It can therefore be inferred that if v'ᵢ₊₁ matches vᵢ₊₁, mᵢ is authentic. If both mᵢ and mᵢ₊₁ are declared provisionally authentic, the effective length of the MAC vᵢ becomes 2w because of the addition of MAC vᵢ₊₁ to vᵢ. That is, the trust level count of mᵢ also becomes two. In this manner, the effective MAC length and trust level count of message mᵢ can be built up until it is greater than a predefined value. When the effective MAC length of a message exceeds its predefined value, the message is declared as fully authenticated by receiving module 106. The fully authenticated message is then executed, or can be in turn forwarded to the desired recipient that is connected to the receiving module.

The predefined value used to declare messages as fully authenticate can be defined in terms of a number of messages, received subsequent to the message, which need to be declared provisionally authentic, in order to declare a received message as fully authenticated. This is termed as the trust level of a message. The required trust level of a message can be defined based on the importance of the message. The higher the importance of the message, the higher is the trust level of the message. Hence, messages with high importance, and consequently high trust levels, require a larger number of subsequent messages to be declared provisionally authentic in order to declare the message as fully authenticated compared to messages with lower trust levels. In this way, each message can be assigned with a required trust level for it to be declared fully authentic. The required trust level of a message is either appended to the message to be transmitted by sending module 102, or is known by receiving module 106 based on the type of the received message.

In an embodiment of the present invention, the trust level of a message is defined by sending module 102 based on the message. The required trust level of a message can be communicated to receiving module 106, along with the message transmission. In one embodiment, the trust level can be defined based on user input. The user input either directly specifies the required trust level of a message, or specifies the importance of the message. Based on the user specified importance, the trust level can then be defined by sending module 102. Receiving module 106 stores a received message in memory unit 210 until the message is fully authenticated.

In an embodiment of the present invention, the trust level of a message is indicative of the level of authentication of the message. Based on this trust level, a probability of authentication is assigned to each message.

In an embodiment of the present invention, the encryption input block is periodically restarted with a random number as the initialization vector, in order to allow receiving modules to re-synchronize. The initialization vector is then synchronized with receiving module 106. The encryption input block can be restarted after a predefined number of messages have been transmitted. The restarting of the encryption input block results in the resetting of the trust level count for all provisionally authenticated messages.

Message encryption to ensure confidentiality is to be distinguished from message authentication to exclude spoofing or tampering. Message encryption is not a prerequisite to message authentication, and a non-critical receiver may omit message encryption in order to save processing power and complexity of key distribution. However, if the messages *mᵢ* themselves are not encrypted, the encryption scheme applied to the hash must be strong enough to withstand *known plaintext attacks*, i.e. to prevent an attacker from deriving the authentication key *K* by observing the message and MAC sequences {*mᵢ*} and {ν*ᵢ*}.

The hash encryption must have some sort of memory or feedback function, which is the case for block cipher with feedback algorithms, but which excludes the use of stream ciphers. An attack on message *mᵢ* which has been successful at time i (correctly guessed *vᵢ*) will however sooner or later be detected, as the effective MAC length increases due to the memory of the encryption: The attacker guessing the hash values would have to continuously guess subsequent *vᵢ* correctly, which becomes increasingly improbable. This is a consequence of the error propagation property of encryption modes such as cipher feedback, a property which is not normally desired. Also, the attacker cannot eavesdrop and record pairs (*mᵢ*, *vᵢ*) for later insertion, as the memory of the encryption ensures that specific values of *mᵢ* will result in different time-dependent *vᵢ*.

To summarise, the present invention is concerned with the use of short message authentication codes, to provide message authentication of transmitted messages. Each transmitted message is assigned a trust level that indicates the number of subsequent messages that are authenticated. As subsequent messages are authenticated, the trust level associated with a message increases, and so does the effective MAC length. Based on this trust level, a message with a short MAC can be authenticated with a level of authentication, which is equivalent to that provided by long MACs. By combining the MACs of subsequent messages, sufficient authentication is provided.

### LIST OF DESIGNATIONS

- 102: Sending Module
- 104: Communication Link
- 106: Receiving Module
- 202: MAC Module
- 204: Memory Unit
- 206: Trust Level Module
- 208: Transmission Module
- 210: Memory Unit
- 212: MAC Module
- 214: Provisional Authentication Module
- 216: Authentication Module
- 302: Generation of MAC step
- 304: Appending of calculated MAC step
- 306: Generation of MAC at Receiving Module step
- 308: Comparing of calculated MAC with received MAC step
- 310: Provisional authentication of message step
- 312: Incrementing trust level count step
- 314: Rejection of message step
- 316: Rejection of all provisionally authenticated messages step
- 318: Authentication of message step
- 402: Encryption of input block with key step
- 404: Limiting size of encryption output block step
- 406: Generation of MAC step
- 408: Limiting size of MAC step
- 502: Encryption of input block with key step
- 504: Limiting size of encryption output block step
- 506: Generation of MAC step
- 508: Limiting size of MAC step
- 510: Comparing calculated MAC with received MAC step
- 512: Incrementing trust level step

## Claims

1. A method of authenticating messages by means of Message Authentication Codes (MAC), wherein a MAC is calculated based on a message, and wherein the message and the MAC are transmitted from a sender to a recipient, the method comprising
- calculating a MAC based on a message to be sent and at least one preceding message (302),
- sending and receiving the message and the MAC (304),
- calculating a MAC for the received message, based on the received message and the previously received at least one preceding message (306),
- declaring the received message provisionally authentic if the MAC calculated for the received message matches the received MAC (310), and
- declaring the received message fully authentic if at least one subsequent message, for which a calculated MAC depends on the received message, is declared provisionally authentic (318)
, **characterized in that** the MAC for a message is based on all preceding messages, and **in that** a received message declared provisionally authentic is declared fully authentic if a predefined number of subsequent messages are declared provisionally authentic, the number of subsequent messages to be declared provisionally authentic to declare the message fully authentic is appended along with the message, or is known by a reveving module (106) connected to the recipient based on a type of the received message.

2. The method according to claim 1, **characterized in that** the MAC is calculated using a block cipher with feedback algorithm.

3. The method according to claim 1, **characterized in that** the size of the MAC is limited to a predefined size.

4. The method according to claim 1, **characterized in that** the number of subsequent messages to be declared provisionally authentic to declare the message fully authentic is determined on the basis of the importance of the message.

5. An apparatus for authenticating messages by means of Message Authentication Codes (MAC) , comprising a sending module (102) with means (208) for sending a message along with a calculated MAC as well as comprising a receiving module (106) with means (210) for storing a received message and means (216) for declaring the received message fully authentic, **characterized in that**
- the sending module (102) comprises
- means (202) for calculating a MAC for a message based on the message and preceding messages,
- means (206) for determining a number of subsequent messages to be declared provisionally authentic to declare the message fully authentic,
- means (208) for sending the message along with the calculated MAC and the number of subsequent messages to be declared provisionally authentic to declare the message fully authentic, and **characterized in that**
- the receiving module (106) comprises
- means (212) for calculating a MAC for the received message based on the received message and the received preceding messages,
- means (214) for declaring the received message provisionally authentic if the received MAC matches the MAC calculated for the received message,
- means (216) for declaring the received message fully authentic if the determined
- number of subsequent messages are declared provisionally authentic.

6. The apparatus according to claim 5, **characterized in that** the means for determining a number of subsequent messages to be declared provisionally authentic to declare the message fully authentic is based on the importance of the message.

7. The apparatus according to claim 5, **characterized in that** the sending module further comprises means for receiving user input to determine the number of subsequent messages to be declared provisionally authentic to declare the message fully authentic.

## Patentansprüche

1. Verfahren zum Authentifizieren von Nachrichten mittels Nachrichtenauthentifikationscodes (MAC), wobei ein MAC auf der Basis einer Nachricht berechnet wird und wobei die Nachricht und die MAC von einem Absender zu einem Empfänger gesendet werden, wobei das Verfahren die folgenden Schritte umfasst:
- Berechnen eines MAC auf der Basis einer zu sendenden Nachricht und mindestens einer vorausgehenden Nachricht (302),
- Senden und Empfangen der Nachricht und des MAC (304),
- Berechnen eines MAC für die empfangene Nachricht auf der Basis der empfangenen Nachricht und der zuvor empfangenen mindestens einen vorausgehenden Nachricht (306),
- Erklären der empfangenen Nachricht als provisorisch authentisch, wenn der für die empfangene Nachricht berechnete MAC mit dem empfangenen MAC übereinstimmt (310) und
- Erklären der empfangenen Nachricht als voll authentisch, wenn mindestens eine nachfolgende Nachricht, für die ein berechneter MAC von der empfangenen Nachricht abhängt, als provisorisch authentisch erklärt wird (318),
**dadurch gekennzeichnet, dass** der MAC für eine Nachricht auf allen vorausgehenden Nachrichten basiert und dass eine als provisorisch authentisch erklärte empfangene Nachricht als voll authentisch erklärt wird, wenn eine vordefinierte Anzahl nachfolgender Nachrichten als provisorisch authentisch erklärt wird, wobei die Anzahl von als provisorisch authentisch zu erklärenden nachfolgenden Nachrichten zum Erklären der Nachricht als voll authentisch zusammen mit der Nachricht angehängt wird oder einem Empfangsmodul (106), das mit dem Empfänger verbunden ist, auf der Basis eines Typs der empfangenen Nachricht bekannt ist.

2. Verfahren nach Anspruch 1, **dadurch gekennzeichnet, dass** der MAC unter Verwendung einer Blockchiffrierung mit Rückkopplungsalgorithmus berechnet wird.

3. Verfahren nach Anspruch 1, **dadurch gekennzeichnet, dass** die Größe des MAC auf eine vordefinierte Größe begrenzt ist.

4. Verfahren nach Anspruch 1, **dadurch gekennzeichnet, dass** die Anzahl von als provisorisch authentisch zu erklärenden nachfolgenden Nachrichten zum Erklären der Nachricht als voll authentisch auf der Basis der Wichtigkeit der Nachricht bestimmt wird.

5. Vorrichtung zum Authentifizieren von Nachrichten mittels Nachrichtenauthentifikationscodes (MAC), umfassend ein Sendemodul (102) mit einem Mittel (208) zum Senden einer Nachricht zusammen mit einem berechneten MAC sowie umfassend ein Empfangsmodul (106) mit einem Mittel (210) zum Speichern einer empfangenen Nachricht und einem Mittel (216) zum Erklären der empfangenen Nachricht als voll authentisch, **dadurch gekennzeichnet, dass**
- das Sendemodul (102) Folgendes umfasst:
- ein Mittel (202) zum Berechnen eines MAC für eine Nachricht auf der Basis der Nachricht und vorausgehender Nachrichten,
- ein Mittel (206) zum Bestimmen einer Anzahl von als provisorisch authentisch zu erklärenden nachfolgenden Nachrichten zum Erklären der Nachricht als voll authentisch,
- ein Mittel (208) zum Senden der Nachricht zusammen mit dem berechneten MAC und der Anzahl von als provisorisch authentisch zu erklärenden nachfolgenden Nachrichten zum Erklären der Nachricht als voll authentisch und **dadurch gekennzeichnet, dass**
- das Empfangsmodul (106) Folgendes umfasst:
- ein Mittel (212) zum Berechnen eines MAC für die empfangene Nachricht auf der Basis der empfangenen Nachricht und der empfangenen vorausgehenden Nachrichten,
- ein Mittel (214) zum Erklären der empfangenen Nachricht als provisorisch authentisch, wenn der empfangene MAC mit dem für die empfangene Nachricht berechneten MAC übereinstimmt,
- ein Mittel (216) zum Erklären der empfangenen Nachricht als voll authentisch, wenn die bestimmte Anzahl von nachfolgenden Nachrichten als provisorisch authentisch erklärt wird.

6. Vorrichtung nach Anspruch 5, **dadurch gekennzeichnet, dass** das Mittel zum Bestimmen einer Anzahl von als provisorisch authentisch zu erklärenden nachfolgenden Nachrichten zum Erklären der Nachricht als voll authentisch auf der Wichtigkeit der Nachricht basiert.

7. Vorrichtung nach Anspruch 5, **dadurch gekennzeichnet, dass** das Sendemodul ferner ein Mittel zum Empfangen von Benutzereingaben umfasst, um die Anzahl von als provisorisch authentisch zu erklärenden nachfolgenden Nachrichten zum Erklären der Nachricht als voll authentisch zu bestimmen.

## Revendications

1. Procédé d'authentification de messages au moyen de codes d'authentification de message (MAC), un MAC étant calculé en fonction d'un message et le message et le MAC étant transmis d'un émetteur à un destinataire, le procédé comprenant les étapes consistant à :
- calculer un MAC en fonction d'un message à transmettre et d'au moins un message précédent (302),
- transmettre et recevoir le message et le MAC (304),
- calculer un MAC pour le message reçu, en fonction du message reçu et du message précédent préalablement reçu (306),
- déclarer le message reçu provisoirement authentique si le MAC calculé pour le message reçu correspond au MAC reçu (310), et
- déclarer le message reçu catégoriquement authentique si au moins un message suivant, pour lequel un MAC calculé dépend du message reçu, est déclaré provisoirement authentique (318) ;
le procédé étant **caractérisé en ce que** le MAC pour un message est fonction de tous les messages précédents, et **en ce qu'**un message reçu déclaré provisoirement authentique est déclaré catégoriquement authentique si un nombre prédéfini de messages suivants est déclaré provisoirement authentique, le nombre de messages suivants à déclarer provisoirement authentique pour déclarer le message catégoriquement authentique étant joint au message ou étant connu d'un module récepteur (106) relié au destinataire en fonction d'un type du message reçu.

2. Procédé selon la revendication 1, **caractérisé en ce que** le MAC est calculé au moyen d'un chiffrement par blocs à algorithme de rétroaction.

3. Procédé selon la revendication 1, **caractérisé en ce que** la taille du MAC est limitée à une taille prédéfinie.

4. Procédé selon la revendication 1, **caractérisé en ce que** le nombre de messages suivants à déclarer provisoirement authentique pour déclarer le message catégoriquement authentique est déterminé en fonction de l'importance du message.

5. Appareil d'authentification de messages au moyen de codes d'authentification de message (MAC), comprenant un module émetteur (102) doté d'un moyen (208) conçu pour transmettre un message conjointement avec un MAC calculé ainsi qu'un module récepteur (106) doté d'un moyen (210) conçu pour mémoriser un message reçu et d'un moyen (216) conçu pour déclarer le message reçu catégoriquement authentique, l'appareil étant **caractérisé en ce que** :
- le module émetteur (102) comprend :
- un moyen (202) conçu pour calculer un MAC pour un message en fonction du message et de messages précédents,
- un moyen (206) conçu pour déterminer un nombre de messages suivants à déclarer provisoirement authentique pour déclarer le message catégoriquement authentique,
- un moyen (208) pour transmettre le message conjointement avec le MAC calculé et le nombre de messages suivants à déclarer provisoirement authentique pour déclarer le message catégoriquement authentique, et l'appareil étant **caractérisé en ce que** :
- le module récepteur (106) comprend :
- un moyen (212) conçu pour calculer un MAC pour le message reçu en fonction du message reçu et des messages précédents reçus,
- un moyen (214) conçu pour déclarer le message reçu provisoirement authentique si le MAC reçu correspond au MAC calculé pour le message reçu, et
- un moyen (216) conçu pour déclarer le message reçu catégoriquement authentique si le nombre déterminé de messages suivants est déclaré provisoirement authentique.

6. Appareil selon la revendication 5, **caractérisé en ce que** le moyen conçu pour déterminer un nombre de messages suivants à déclarer provisoirement authentique pour déclarer le message catégoriquement authentique est fonction de l'importance du message.

7. Appareil selon la revendication 5, **caractérisé en ce que** le moyen émetteur comprend en outre un moyen conçu pour recevoir une entrée d'un utilisateur pour déterminer le nombre de messages suivants à déclarer provisoirement authentique pour déclarer le message catégoriquement authentique.
